# EUROPEAN PATENT SPECIFICATION

(11) **EP 3 065 498 B1**
(45) Date of publication and mention of the grant of the patent: **22.11.2017**
(21) Application number: 15157585.9
(22) Date of filing: 04.03.2015
(51) Int. Cl.: H04W 76/02, H04W 88/04

(54) **METHOD AND SYSTEM FOR ESTABLISHING A DATA COMMUNICATION BETWEEN A MOBILE ENTITY AND THE INTERNET**
VERFAHREN UND SYSTEM ZUM AUFBAU EINER DATENKOMMUNIKATION ZWISCHEN EINER MOBILEN EINHEIT UND DEM INTERNET
PROCÉDÉ ET SYSTÈME D'ÉTABLISSEMENT D'UNE COMMUNICATION DE DONNÉES ENTRE UNE ENTITÉ MOBILE ET INTERNET

(43) Date of publication of application: 07.09.2016
(73) Proprietor: Vodafone GmbH, 40549 Düsseldorf (DE)
(72) Inventor: Bindrim, Walter, 45721 Haltern am See (DE); Fernandes, Antonio Carlos Correia, 40489 Düsseldorf (DE); Burmester, Nick, 60385 Frankfurt (DE)
(74) Representative: Patentanwälte Bals & Vogel

(56) References cited:
- US-A1- 2013 294 327

## Description

The present invention relates to a method of establishing a data communication between a mobile entity and the internet via a Wi-Fi access point with a mobile network backhaul. The invention is further related to a network system comprising a respective mobile network for backhauling of a Wi-Fi access point.

It is generally known that mobile devices, for example, mobile entities in the form of mobile telephones can be used as so-called Wi-Fi hotspots. In difference to usual hotspots, a Wi-Fi hotspot with a mobile network backhaul can be used in a much more mobile manner. Due to the fact that the mobile network backhauling provides the possibility to freely locate the Wi-Fi access point, a specific communication procedure has to be carried out to ensure safe and secure internet connection. Usually, a mobile entity selects a Wi-Fi access point and requests connection to the internet. This request is carried out by a data communication, which is forwarded from the Wi-Fi access point to the mobile network of the backhauling step. The data communication is further processed in the mobile network by different gateways. In particular, a service gateway and a packet data network gateway are used. To ensure that the data communication is carried out in the correct manner, several steps, for example, for identification of the mobile entity or for identification of the sort of data communication is necessary. In case a mobile device connected via untrusted WiFi wants a termination into the mobile packet core additional functions are required. In common known procedures, this is carried out in a separate enhanced packet data gateway (ePDG). The ePDG will be therefore the endpoint of a secure tunnel from the mobile device into the mobile packet core. After this the ePDG will establish a standard mobile tunnel towards the PGW. If a mobile device is offering a Wi-Fi access point it supports backhauling of the WiFi traffic into the mobile packet core via the SGW and the PGW. If another mobile device wants to connect in a secure way via that WiFi AP towards the macro network the ePDG is used. To forward the data communication from the packet data network gateway (PGW) in case of the WiFi AP backhauling to the ePDG, an internet connection is necessary. The data communication is forwarded via the internet from the PGW to the ePDG and after the respective specific steps have been carried out in the ePDG, the same data communication has to be sent back to the PGW. Therefore, the PGW is touched twice during that procedure and an internet communication has to be carried out in both directions before the final internet connection can be established. For example US 2013/0294327 describes in general the respective technical background.

Based on the common procedure, the traffic touching the internet is intensively increased. In particular, the data communication is communicated three times to the internet, namely two times from the PGW to the PDG and back and the third time from the PGW to the internet. Beside the additional traffic, this could lead to time delays and so-called jitter problems, which all are recognizable from the user of the mobile entity as a reduced quality of service (QoS). In particular, the data communication is correlated to a time critical service, for example, a streaming of a video or an audio source or a voice over IP communication, such reduction in quality of service is not acceptable for the user of a mobile entity.

Based on aforesaid discussion of commonly known procedures, it is one object of the present invention to overcome that disadvantages at least partly. In particular, it is an object of the present invention to provide a method for establishing a data communication between a mobile entity and the internet with reduced traffic and therefore with higher quality of service appearance at the mobile entity for the respective user.

Aforesaid object is achieved by a method according to independent claim 1 and a network system according to independent claim 11 of the present application. Further features and details of the invention result from the subclaims, the description and the figures. Features and details discussed with respect to the inventive method are also correlated with the inventive network and the other way around.

According to the present invention, a method is provided for establishing a data communication between a mobile entity and the internet via a Wi-Fi access point with a mobile network backhaul. Such an inventive method comprises the following steps:
- Offering a service set identification (SSID) in form of a value added service set identification (VAS-SSID) by the Wi-Fi access point (AP),
- connecting the mobile entity to the Wi-Fi access point by selecting the value added service set identification of the Wi-Fi access point,
- forwarding a data communication from the Wi-Fi access point via the mobile network to a serving gateway to the mobile network by using an access point name (APN) specific for the selected service set identification,
- forwarding the data communication from the serving gateway (SGW) directly to an PDN evolved packet data gateway (PePDG),
- forwarding the data communication to the internet.

One of the general core ideas of the present invention is the use of the so-called PDN evolved packet data gateway, which is described as PePDG in the following description. Thus, such PePDG is different from the regular ePDG, which is used in commonly known procedures. One main difference is that the PePDG is directly accessible from the SGW via standard interfaces. Therefore, the SGW can directly offer and forward the data communication to the PePDG without touching the internet and without touching a packet data network gateway (PDG). The communication between the SGW and the PePDG is therefore located internally inside of the mobile network. Therefore, such traffic does not have to pass the internet, which reduces internet traffic.

One further advantage is that the data communication is transmitted from the SGW directly to the PePDG after the respective steps of identification has been carried out inside of the PePDG.. This leads also to reduced traffic inside of the mobile network and thereby also increasing quality of service for the user of the mobile entity.

By forwarding the data communication to the internet according to the last step of the present inventive method, a direct forwarding is also possible as well as an indirect forwarding. Directly forwarding would be a direct connection between the PePDG and the internet. Of course, also separate and several additional steps can be carried out for an indirect connection to the internet. For example, the data communication can be forwarded from the PePDG to a PGW and from there past on to the internet. Also, the use of several identification services, a so-called AAA or HSS service, can be used for a further identification step in particular as to collecting information about usage and accounting of the user of the mobile entity.

According to the present invention, the Wi-Fi access point, for example, can be configured to be a mobile phone, working as a hotspot. A mobile phone can also be labelled as a so-called My-Fi device. This leads to a situation where one or even more other mobile entities can connect to the internet by using such a mobile phone as a hotspot in form of a Wi-Fi access point.

A further use could be a Wi-Fi access point, which is configured to be located in a car. Inside a car several users with own mobile entities, for example, tablet PCs, laptops or even other mobile phones can be located. Each of those users can try to get a connection to the internet via one single Wi-Fi access point. Due to the fact that according to the present invention the traffic is reduced massively, even if two or more mobile entities try to connect to the internet in a timely parallel manner, the reduction of traffic leads to a high quality of service for all data communication from several mobile entities via one common Wi-Fi access point.

In other words, the reduced traffic is in particular achieved by offering a shortcut for specific situations. Such a specific situation is established when the mobile entity is selecting a specific service set identification. The term service set identification is to be understood in particular as the name of the Wi-Fi access point, which appears to be selected on a mobile entity. For example, one Wi-Fi access point can offer two or even more different service set identifications (SSID) for one single Wi-Fi access point. By choosing one specific SSID, the user selects one connection method, which is correlated with that specific SSID. Therefore, for example, the customer of a specific network company is choosing a specific value added service SSID (VAS-SSID), which is correlated on one hand with the Wi-Fi access point and on the other hand with his provider of the mobile network. By selecting that specific VAS-SSID, a correlation can be carried out inside of the Wi-Fi access point. Due to that correlation, the Wi-Fi access point has different possibilities to forward the data communication to the mobile network, in particular via the SGW. That forwarding step of the data communication is carried out after correlating the selected SSID with a respective specific access point name (APN). This has to be understood as intelligence, which is carried out inside the Wi-Fi access point. The correlation leads to a specific forwarding information based on the APN. Therefore, the SGW, receiving the data communication from the Wi-Fi access point, gets some further information. This further information contains the selected APN, which is once more specific for the selected SSID. Based on that selection, the SGW can work in a specific manner on that selection and therefore passing on the data communication to the PePDG only in the case of a specific SSID selection and the respective forward communication based on a specific APN.

Based on aforesaid description it is apparent that only in that specific selected situations, where the respective specific SSID is selected, the respective specific APN is correlated and the SGW is forwarding the data communication the PePDG. In all other cases without selecting the specific SSID/APN, which is correlated with the inventive method, the regular method is carried out. This leads to the possibility to offer the higher quality of service, which is achieved by the inventive method, only to customers of the mobile network and therefore, make a distinction between foreign users and customer users of the mobile network company.

It could be of advantage that according to the present inventive method the data communication is established in the form a security critical communication and/or in the form of a time critical communication, in particular in the form of a voice over IP communication. This is of course only an example. Also other data communications, in particular time critical data communication, for example, audio or video streaming, can be established as a data communication. Due to the fact that time critical data communication leads to increased quality of service needs, the present inventive method offers its increased quality of service in particular for that time critical solutions.

It is also possible that according to the present invention the service gateway (SGW) comprises a list of forwarding information based on the APN. This leads to intelligence inside of the SGW. A respective list offers the information what to do with the data communication received from a Wi-Fi access point. And that list comprises, for example, a whitelist and/or a blacklist and/or a complete list of possible APNs. Based on the APN, which is received together with the data communication from the Wi-Fi access point, and comparing that information to the list of forwarding information, the SGW can select how to proceed. In particular, this selection is carried out to proceed according to the present invention and to use the shortcut to the PePDG according to the present inventive method.

According to a further aspect of the present invention, the method is characterized in that the step of connecting the mobile entity to the Wi-Fi access point by selecting the value added service set identification (VAS-SSID) of the Wi-Fi access point is carried out automatically by the mobile entity. For example, if a mobile entity is specified by the user or automatically by the user of a specific SIM-card or other kind of data information, the mobile entity comprises information of the respective network provider. If the network provider of the mobile entity is identical or correlated, for example, in the case of a roaming scenario, to the provider of the mobile network of the backhauling of the Wi-Fi access point, an automatically carried out selection of the SSID can be carried out. For example, if the customer of the mobile network, which provides the mobile network backhaul for the Wi-Fi access point, sits in a car, the mobile entity can recognize the provider of the backhauling network and therefore selects automatically the VAS-SSID to carry out the inventive method. This leads to reduced manual support from the user of the mobile entity and provides the advantage of the present invention to more customers.

It is also possible that according to the present invention the step of connecting the mobile entity to the Wi-Fi access point by selecting a value added service set identification of the Wi-Fi access point is carried out manually in form of a selection of the user at the mobile entity. This step can be carried out alternatively or additionally to the solution descripted above. A manual selection offers more flexibility of the user. In particular, in the case of a mobile entity carrying multi SIM solutions, for example, two or more SIM cards correlating with two or more different providers, such manual selection could be of high advantages. Of course, one further advantage is the reduction of complexity for the selection step of the inventive method.

It is further possible that according to the present invention the data communication is forwarded from the PDN evolved packet gateway (PePDG) to an identification server to identify the mobile entity and/or the user of the mobile entity. Such forwarding can be carried out directly from the PePDG or indirectly via, for example, a PGW. The identification server can comprise the commonly known AAA servers or HSS servers to offer seamless identification. An identification for example, can be carried out based on the MSISDN numbers, the IMSI numbers or some specific mobile entity numbers. Seamless identification leads just to the possibility to correlate traffic, which is generated by the data communication to the specific user of the mobile entity and not only to the user of the Wi-Fi access point. For example, a user of a mobile entity sitting in the car of a friend can now use the Wi-Fi access point of his friend by the way of being accounted from the mobile network based on his own customer contract with that mobile network company. This is only possible due to the fact that an identification step is carried out to identify not only the Wi-Fi access point but further identify the mobile entity and the respective user.

Further advantages can be achieved if the inventive method is characterized in that the Wi-Fi access point offers at least one additional service set identification, in particular at least one of the following:
- community service set identification (C-SSID)
- internet service set identification (I-SSID)

Aforesaid list is non-exclusive. In particular, one Wi-Fi access point can offer in that case two, three or even more different SSIDs. Therefore, for each SSID a specific APN is correlated. For example, a VAS-APN is correlated with a VAS-SSID, a C-APN is correlated with a C-SSID as well as an I-APN is correlated with the I-SSID. Further SSIDs for further clients are also possible according to the present invention. Each of the SSID, for example, can modify slightly the inventive method, which is described later in more detail. In particular, users of the Wi-Fi access point, which are not customers of the mobile network company backhauling the Wi-Fi access point, can use that Wi-Fi access point by specific and separate accounting. For example, based on an I-SSID, the mobile entity with the respective data communication can be forwarded to an internet portal offering an accounting solution for charging the data communication directly to the mobile entity and the respective user and not charging the owner of the Wi-Fi access point. For example, the user of the mobile entity can enter his credit card number into that portal and thereby use the Wi-Fi access point for his own data communication and being charged himself and not the owner of the Wi-Fi access point.

It is also possible that according to the present invention the method is characterized in that the data communication is forwarded from the PDN evolved packet data gateway and/or from a packet network gateway (PGW) to a specific identification server to identify the mobile entity and/or the user of the mobile entity based on the selected service set identification. This is in particular the case, which is descripted above when a separate user, who does not own the Wi-Fi access point, wants to carry out data communication to the internet via the Wi-Fi access point. A separate billing is possible as well as a separate responsibility structure based on the content of the carried out data communication. All that distinction between different mobile entities, different method alternatives and different users of the Wi-Fi access point is carried out by the selection of specific SSIDs and a correlation with specific APNs in side of the Wi-Fi access point.

It is further of advantage that according to the present invention the method is characterized in that the Wi-Fi access point is continuously connected to the mobile network. This is a so-called always-on hotspot for the Wi-Fi access point. It is always connected to the internet via the mobile network backhaul and thereby can provide a continuous service for data communication. This is in particular of advantage in situations where energy is no problem. For example, if the Wi-Fi access point is established inside of a car, it can be used in an always-online solution as long as the car is turned on and the motor is running. Additional an extension of a Small Cell including WiFi at a lamp site could use the mobile Network for backhauling.

It is also possible that according to the present invention the method is characterized in that the Wi-Fi access point connects to the mobile network on demand after a mobile entity has connected to the Wi-Fi access point. This leads to a specific reduction of the network connectivity and in particular to a reduction of energy consumption of the Wi-Fi access point. In contrast to the always-online solution, this solution can be called the on-demand solution.

A further aspect of the present invention is offered by a network system comprising a mobile network for backhauling of a Wi-Fi access point, in particular under the use of an inventive method. The mobile network comprises a serving gateway (SGW) for receiving a data communication from the Wi-Fi access point as well as a PDN evolved packet data gateway (PePDG) in direct communication with the serving gateway (SGW). The data communication can be received directly from the serving gateway to forward the data communication to the PGW or in case of offloading direct towards the internet.

Due to the respective structure and in particular by using an inventive method, the inventive network system can provide the same advantages, which have been discussed in detail as to the inventive method.

The present invention is discussed in more detail with respect to the accompanying drawings, which show schematically:
- Fig. 1: a first step of an inventive method,
- Fig. 2: a second step of the inventive method,
- Fig. 3: a further step of the inventive method,
- Fig. 4: a further step of the inventive method and,
- Fig. 5: an alternative way of the inventive method.

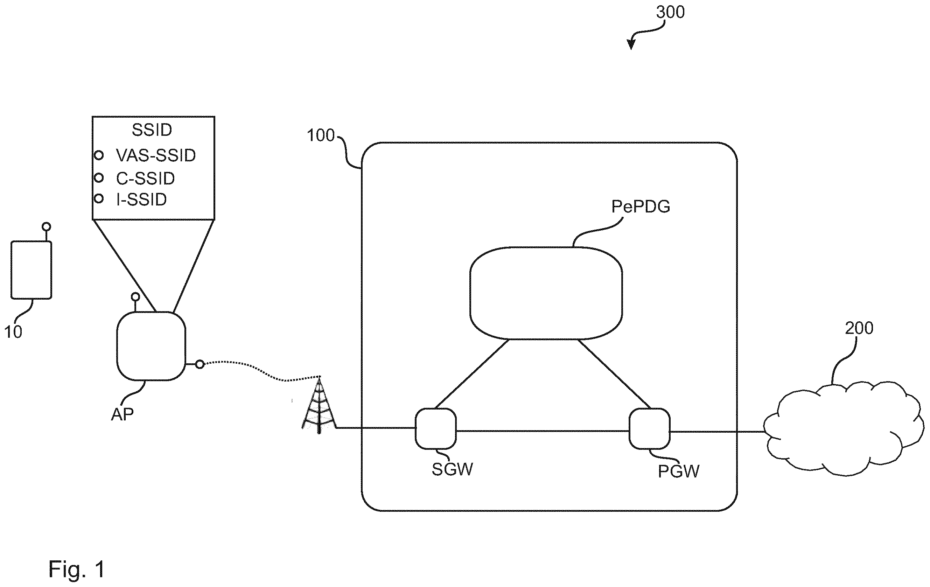

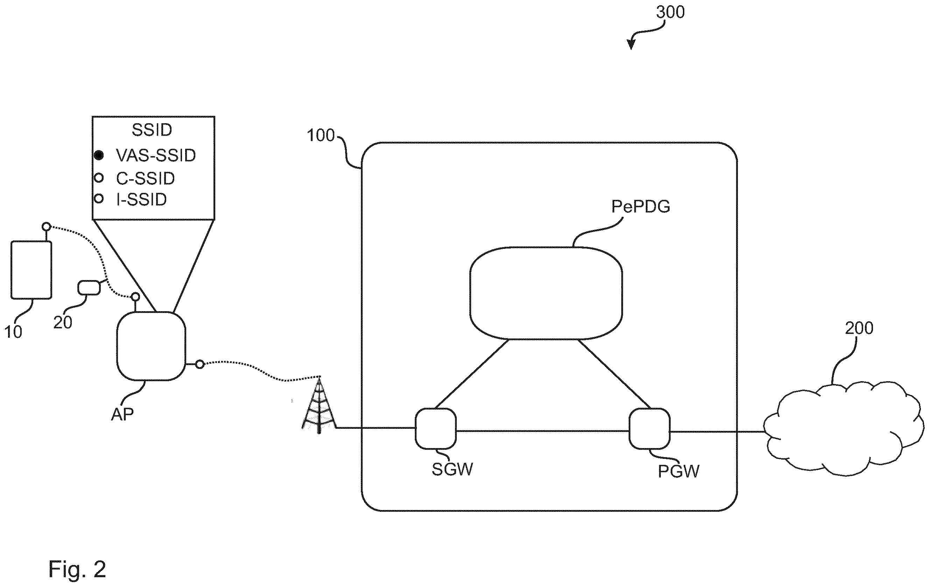

Based on Figs. 1 to 5 different solutions of the present inventive method are discussed in more detail. For example, in this case, a Wi-Fi access point AP is located inside of a car. Which can be seen in fig. 1, the Wi-Fi access point AP comprises two antennas. The lower right antenna is connected to the mobile network 100, for example, in an on-demand solution or an always-on solution. This antenna is used for backhauling the WiFi traffic.

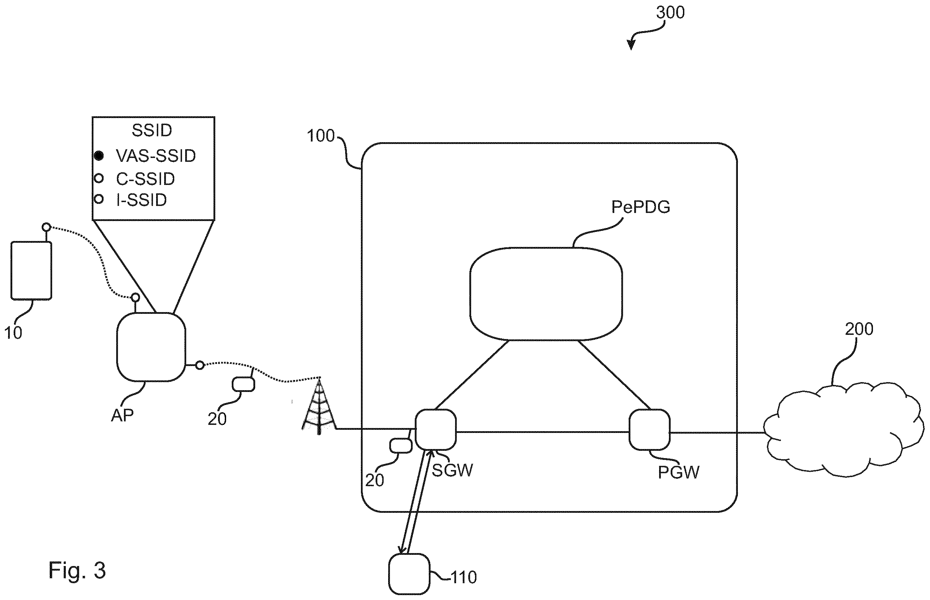

On the other hand, a second antenna at the upper left of the Wi-Fi access point AP offers in this case three different SSIDs, namely the VAS-SSID, the C-SSID and the I-SSID. Inside of that respective car, a mobile entity 10 in form of a mobile phone is located. In a first step, the mobile entity 10 connects to the Wi-Fi access point AP by selecting one specific SSID. In this case, the VAS-SSID is selected and a data communication 20 is forwarded to the Wi-Fi access point AP. In the next step, which can be seen in fig. 3, the data communication 20 is forwarded from the Wi-Fi access point AP into the mobile network 100 over, for example, a 3G, or a LTE mobile network 100. After having received the data communication 20 inside the mobile network 100 it is passed on to a serving gateway SGW, which can now decide what to do with the data communication 20. This decision is carried out by recognizing the sender of the data communication 20, namely the Wi-Fi access point AP. In this case, the Wi-Fi access point AP comprises specific access point namely APN, which are precisely specific on the selected SSID. Based on that specific APN, the serving gateway SGW can now select two different ways to forward the data communication 20. If the selected SSID was the C-SSID or the I-SSID, the SGW can carry out in the commonly known way and forward the data communication 20 directly to a packet data network gateway PGW and from there to the internet 200 or any other solutions.

In the present case, the mobile entity 10 selected the VAS-SSID and therefore, the Wi-Fi access point AP provides the data communication 20 to the SGW under the use of a specific VAS-APN. Therefore, the SGW can now use that information to use a shortcut for the data communication 20 to a PDN evolved packet data gateway PePDG. To have that information, the SGW can comprise a respective list of forwarding information, which can be a whitelist, a blacklist or even a complete list of possibilities. That list can be stored inside the SGW or, for example, can be located on a server 110 outside the SGW, which can be requested in the specific case of data communication 20.

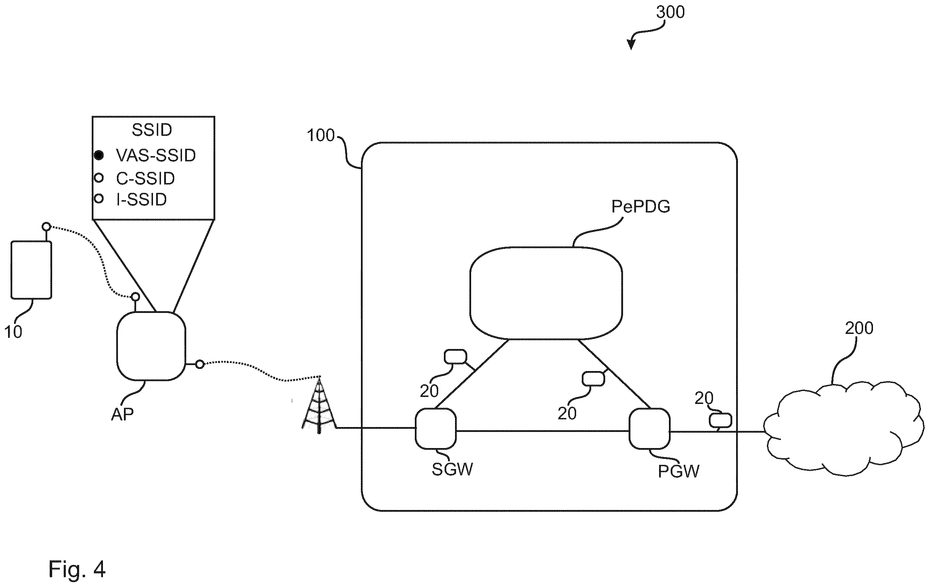

In case of a shortcut according to fig. 4, the data communication 20 is processed further in the PePDG and then forwarded directly to the internet 200 or in the case of fig. 4 indirectly under passing the PGW.

Aforesaid description, for example, can be a general data communication 20 or in particular a time critical data communication 20, which can take the form of a voice over IP communication or an audio or video streaming situation.

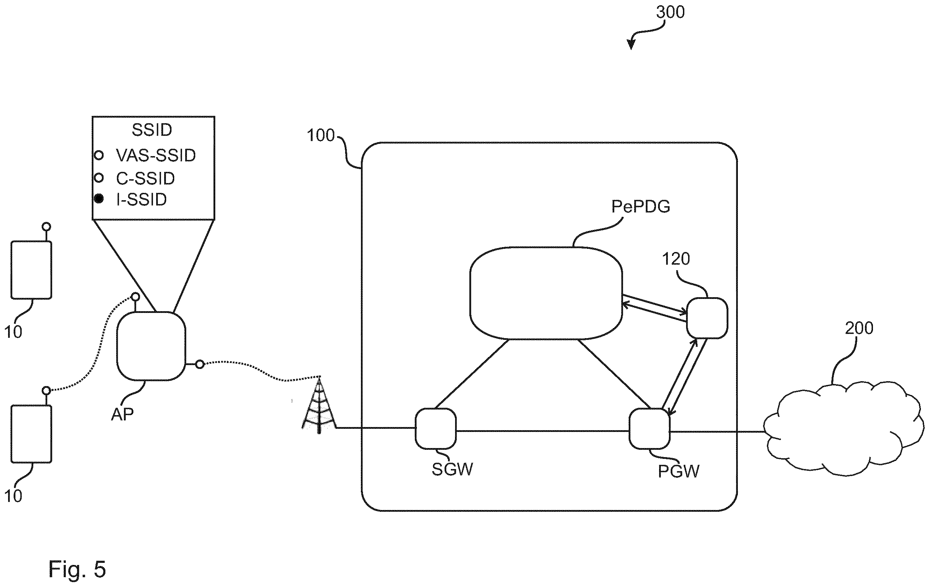

Fig. 5 shows a situation where two different mobile entities 10 are located in the same car. The lower mobile entity 10 is a non-customer of the network provider of the mobile network 100. In that case, the VAS-SSID is not possible to be used by the mobile entity 10 and therefore, this mobile entity 10 now selects the I-SSID to connect to the internet 200 without added value services. The information and the data communication 20 are passed on in generally in the same manner, which has been discussed in detail to figs. 1 and 4. However, after arriving at the SGW, the information of the I-APN based on the I-SSID is now causing the SGW to forward the data communication to the PGW and from there making a contact over the internet 200 to a not shown PDG to process that data communication 20 further. This can be understood as in general a regular situation. Of course, the PGW can also contact a separate identification server 120, which offers seamless identification in form of HSS or AAA. If the mobile entity 10 has a user, who is not registered in the AAA or the HSS, a portal can be opened via the internet or inside of the identification server 120 to give the user the possibility for a separate billing and the respective entering of information for that billing process.

Aforesaid description of the accompanying drawings is only by the way of detail. Specific features of each aspect of the present invention and of the figures can be combined with each other if of technical sense.

### REFERENCE SIGNS

- 10: mobile entity
- 20: data communication
- 30: forwarding information

- 100: mobile network
- 110: server
- 120: identification server
- 200: internet
- 300: Network system

- SGW: serving gateway
- PGW: packet data network gateway
- PePDG: PDN evolved packet data gateway
- AP: Wi-Fi access point
- SSID: service set identification
- VAS-SSID: value added service SSID
- C-SSID: community SSID
- I-SSID: internet SSID
- APN: access point name

## Claims

1. Method of establishing a data communication (20) between a mobile entity (10) and the internet via a Wi-Fi access point (AP) with a mobile network (100) backhaul, comprising the following steps:
- Offering a service set identification (SSID) in form of a value added service set identification (VAS-SSID) by the Wi-Fi access point (AP),
- Connecting the mobile entity (10) to the Wi-Fi access point (AP) by selecting the value added service set identification (VAS-SSID) of the Wi-Fi access point (AP),
- Forwarding a data communication (20) from the Wi-Fi access point (AP) via the mobile network (100) to a serving gateway (SGW) of the mobile network (100) by using an access point name (APN) specific for the selected service set identification (SSID),
**characterized by** the following steps
- Forwarding the data communication (20) from the serving gateway (SGW) directly to a PDN evolved packet data gateway (PePDG) which is directly accessible from the serving gateway (SGW) via standard interfaces by using a communication located internally inside of the mobile network
- Forwarding the data communication (20) from the PDN evolved packed data gateway (PePDG) to the internet (200).

2. Method according to claim 1, **characterized in that** the data communication (20) is established in the form a security critical communication and/or in the form of a time critical communication, in particular in the form of a Voice over IP communication.

3. Method according to any of the preceding claims, **characterized in that** the service gateway (SGW) comprises a list of forwarding information (30) based on the access point name (APN).

4. Method according to any of the preceding claims, **characterized in that** the step of connecting the mobile entity (10) to the Wi-Fi access point (AP) by selecting the value added service set identification (VAS-SSID) of the Wi-Fi access point (AP) is carried out automatically by the mobile entity (10).

5. Method according to any of the preceding claims, **characterized in that** the step of connecting the mobile entity (10) to the Wi-Fi access point (AP) by selecting the value added service set identification (VAS-SSID) of the Wi-Fi access point (AP) is carried out manually in form of a selection of the user at the mobile entity (10).

6. Method according to any of the preceding claims, **characterized in that** the data communication (20) is forwarded from the PDN evolved packet gateway (PePDG) to an identification server (120) to identify the mobile entity (10) and/or the user of the mobile entity (10).

7. Method according to any of the preceding claims, **characterized in that** the Wi-Fi access point (AP) offers at least one additional service set identification (SSID), in particular at least one of the following:
- community service set identification (C-SSID)
- internet service set identification (I-SSID)

8. Method according to claim 7, **characterized in that** the data communication (20) is forwarded from the PDN evolved packet gateway (PePDG) and/or from a packet data network gateway (PGW) to a specific identification server (120) to identify the mobile entity (10) and/or the user of the mobile entity (10) based on the selected service set identification (SSID).

9. Method according to any of the preceding claims, **characterized in that** the Wi-Fi access point (AP) is continuously connected to the mobile network (100).

10. Method according to any of the preceding claims 1 to 8, **characterized in that** the Wi-Fi access point (AP) connects to the mobile network (100) on demand after a mobile entity (10) has connected to the Wi-Fi access point (AP).

11. Network system (300) comprising a mobile network (100) for backhauling of a Wi-Fi access point (AP), in particular under the use of an method according to claims 1 to 10, wherein the mobile network (100) comprises a serving gateway (SGW) for receiving a data communication (20) from the Wi-Fi access point (AP) and a PDN evolved packet data gateway (PePDG) in direct communication with the serving gateway (SGW) to receive the data communication (20) directly from the serving gateway (SGW) and to forward the data communication (20) to the internet (200).

## Patentansprüche

1. Verfahren zum Aufbau einer Datenkommunikation (20) zwischen einer mobilen Einheit (10) und dem Internet über einen Wi-Fi-Zugangspunkt (AP) mit einem Mobilfunknetz (100) - Backhaul, umfassend die folgenden Schritte:
- Anbieten einer Service-Set-Identifikation (SSID) in Form einer Mehrwert-Service-Set-Identifikation (VAS-SSID) durch den Wi-Fi-Zugangspunkt (AP),
- Verbinden der mobilen Einheit (10) mit dem Wi-Fi-Zugangspunkt (AP) durch Auswählen der Mehrwert-Service-Set-Identifikation (VAS-SSID) des Wi-Fi-Zugangspunkts (AP),
- Weiterleiten einer Datenkommunikation (20) von dem Wi-Fi-Zugangspunkt (AP) über das Mobilfunknetz (100) an ein Serving Gateway (SGW) des Mobilfunknetzes (100) durch Verwenden eines Zugangspunktnamens (APN), der spezifisch für die ausgewählte Service-Set-Identifikation (SSID) ist, **gekennzeichnet durch** die folgenden Schritte
- Weiterleiten der Datenkommunikation (20) von dem Serving Gateway (SGW) direkt an ein PDN evolved Packet Data Gateway (PePDG), das direkt von dem Serving Gateway (SGW) über Standardschnittstellen durch Verwenden einer intern innerhalb des Mobilfunknetzes lokalisierten Kommunikation zugänglich ist,
- Weiterleiten der Datenkommunikation (20) von dem PDN evolved Packet Data Gateway (PePDG) an das Internet (200).

2. Verfahren nach Anspruch 1, **dadurch gekennzeichnet, dass** die Datenkommunikation (20) in der Form einer sicherheitskritischen Kommunikation und/oder in der Form einer zeitkritischen Kommunikation aufgebaut wird, insbesondere in der Form einer Voice-over-IP-Kommunikation.

3. Verfahren nach einem der vorstehenden Ansprüche, **dadurch gekennzeichnet, dass** das Service Gateway (SGW) eine Liste Weiterleitungsinformationen (30) basierend auf dem Zugangspunktnamen (APN) umfasst.

4. Verfahren nach einem der vorstehenden Ansprüche, **dadurch gekennzeichnet, dass** der Schritt des Verbindens der mobilen Einheit (10) mit dem Wi-Fi-Zugangspunkt (AP) durch Auswählen der Mehrwert-Service-Set-Identifikation (VAS-SSID) des Wi-Fi-Zugangspunkts (AP) durch die mobile Einheit (10) automatisch durchgeführt wird.

5. Verfahren nach einem der vorstehenden Ansprüche, **dadurch gekennzeichnet, dass** der Schritt des Verbindens der mobilen Einheit (10) mit dem Wi-Fi-Zugangspunkt (AP) durch Auswählen der Mehrwert-Service-Set-Identifikation (VAS-SSID) des Wi-Fi-Zugangspunkts (AP) manuell in Form einer Auswahl des Benutzers an der mobilen Einheit (10) durchgeführt wird.

6. Verfahren nach einem der vorstehenden Ansprüche, **dadurch gekennzeichnet, dass** die Datenkommunikation (20) von dem PDN evolved Packet Gateway (PePDG) an einen Identifikationsserver (120) weitergeleitet wird, um die mobile Einheit (10) und/oder den Benutzer der mobilen Einheit (10) zu identifizieren.

7. Verfahren nach einem der vorstehenden Ansprüche, **dadurch gekennzeichnet, dass** der Wi-Fi-Zugangspunkt (AP) mindestens eine zusätzliche Service-Set-Identifikation (SSID) anbietet, insbesondere mindestens eine der folgenden:
- Community-Service-Set-Identifikation (C-SSID)
- Internet-Service-Set-Identifikation (I-SSID)

8. Verfahren nach Anspruch 7, **dadurch gekennzeichnet, dass** die Datenkommunikation (20) von dem PDN evolved Packet Gateway (PePDG) und/oder von einem Packet Data Network Gateway (PGW) an einen spezifischen Identifikationsserver (120) weitergeleitet wird, um die mobile Einheit (10) und/oder den Benutzer der mobilen Einheit (10) basierend auf der ausgewählten Service-Set-Identifikation (SSID) zu identifizieren.

9. Verfahren nach einem der vorstehenden Ansprüche, **dadurch gekennzeichnet, dass** der Wi-Fi-Zugangspunkt (AP) fortlaufend mit dem Mobilfunknetz (100) verbunden ist.

10. Verfahren nach einem der Ansprüche 1 bis 8, **dadurch gekennzeichnet, dass** sich der Wi-Fi-Zugangspunkt (AP) nach Bedarf mit dem Mobilfunknetz (100) verbindet, nachdem sich eine mobile Einheit (10) mit dem Wi-Fi-Zugangspunkt (AP) verbunden hat.

11. Netzwerksystem (300), umfassend ein Mobilfunknetz (100) zum Backhauling eines Wi-Fi-Zugangspunkts (AP), insbesondere unter der Verwendung eines Verfahrens nach den Ansprüchen 1 bis 10, wobei das Mobilfunknetz (100) ein Serving Gateway (SGW) zum Empfangen einer Datenkommunikation (20) von dem Wi-Fi-Zugangspunkt (AP) und ein PDN evolved Packet Data Gateway (PePDG) in direkter Kommunikation mit dem Serving Gateway (SGW), um die Datenkommunikation (20) direkt von dem Serving Gateway (SGW) zu empfangen und um die Datenkommunikation (20) an das Internet (200) weiterzuleiten, umfasst.

## Revendications

1. Procédé d'établissement d'une communication de données (20) entre une entité mobile (10) et Internet via un point d'accès Wi-Fi (AP) avec un raccordement à un réseau mobile (100), comprenant les étapes consistant à :
- offrir une identification d'ensemble de services (SSID) sous la forme d'une identification d'ensemble de services à valeur ajoutée (VAS-SSID) par le point d'accès Wi-Fi (AP),
- connecter l'entité mobile (10) au point d'accès Wi-Fi (AP) en sélectionnant l'identification d'ensemble de services à valeur ajoutée (VAS-SSID) du point d'accès Wi-Fi (AP),
- acheminer une communication de données (20) du point d'accès Wi-Fi (AP) via le réseau mobile (100) à une passerelle de desserte (SGW) du réseau mobile (100) en utilisant un nom de point d'accès (APN) spécifique à l'identification d'ensemble de services (SSID) sélectionnée,
**caractérisé par** les étapes suivantes :
- l'acheminement de la communication de données (20) de la passerelle de desserte (SGW) directement à la passerelle de données par paquets évoluée PDN (PePDG) qui est directement accessible depuis la passerelle de desserte (SGW) via des interfaces standard en utilisant une communication située intérieurement au sein du réseau mobile,
- l'acheminement de la communication de données (20) de la passerelle de données par paquets évoluée PDN (PePDG) à Internet (200).

2. Procédé selon la revendication 1, **caractérisé en ce que** la communication de données (20) est établie sous la forme d'une communication critique de sécurité et/ou sous la forme d'une communication critique temporelle, en particulier sous la forme d'une communication vocale sur IP.

3. Procédé selon l'une quelconque des revendications précédentes, **caractérisé en ce que** la passerelle de service (SGW) comprend une liste d'informations à acheminer (30) sur la base du nom du point d'accès (APN).

4. Procédé selon l'une quelconque des revendications précédentes, **caractérisé en ce que** l'étape de connexion de l'entité mobile (10) au point d'accès Wi-Fi (AP) en sélectionnant l'identification d'ensemble de services à valeur ajoutée (VAS-SSID) du point d'accès Wi-Fi (AP) est effectuée automatiquement par l'entité mobile (10).

5. Procédé selon l'une quelconque des revendications précédentes, **caractérisé en ce que** l'étape de connexion de l'entité mobile (10) au point d'accès Wi-Fi (AP) en sélectionnant l'identification d'ensemble de services à valeur ajoutée (VAS-SSID) du point d'accès Wi-Fi (AP) est effectuée manuellement sous la forme d'une sélection de l'utilisateur sur l'entité mobile (10).

6. Procédé selon l'une quelconque des revendications précédentes, **caractérisé en ce que** la communication de données (20) est acheminée de la passerelle par paquets évoluée PDN (PePDG) à un serveur d'identification (120) pour identifier l'identité mobile (10) et/ou l'utilisateur de l'entité mobile (10).

7. Procédé selon l'une quelconque des revendications précédentes, **caractérisé en ce que** le point d'accès Wi-Fi (AP) offre au moins une identification d'ensemble de services supplémentaire (SSID), en particulier au moins l'une des suivantes :
- identification d'ensemble de services communautaire (C-SSID)
- identification d'ensemble de services d'Internet (I-SSID).

8. Procédé selon la revendication 7, **caractérisé en ce que** la communication de données (20) est acheminée d'une passerelle par paquets évoluée PDN (PePDG) et/ou d'une passerelle de réseau de données par paquets (PGW) à un serveur d'identification spécifique (120) pour identifier l'entité mobile (10) et/ou l'utilisateur de l'entité mobile (10) sur la base de l'identification d'ensemble de services sélectionnée (SSID).

9. Procédé selon l'une quelconque des revendications précédentes, **caractérisé en ce que** le point d'accès Wi-Fi (AP) est connecté en continu au réseau mobile (100).

10. Procédé selon l'une quelconque des revendications 1 à 8, **caractérisé en ce que** le point d'accès Wi-Fi (AP) se connecte au réseau mobile (100) à la demande après qu'une entité mobile (10) s'est connectée au point d'accès Wi-Fi (AP).

11. Système de réseau (300) comprenant un réseau mobile (100) pour le raccordement d'un point d'accès Wi-Fi (AP) en particulier en utilisant un procédé selon les revendications 1 à 10, dans lequel le réseau mobile (100) comprend une passerelle de desserte (SGW) pour recevoir une communication de données (20) du point d'accès Wi-Fi (AP) et d'une passerelle de données par paquets évoluée PDN (PePDG) en communication directe avec la passerelle de desserte (SGW) pour recevoir la communication de données (20) directement de la passerelle de desserte (SGW) et acheminer la communication de données (20) à Internet (200).
